# EUROPEAN PATENT APPLICATION

(11) **EP 2 642 441 A1**
(43) Date of publication of application: **25.09.2013**
(21) Application number: 13000681.0
(22) Date of filing: 08.02.2013
(51) Int. Cl.: G06Q 30/00

(54) **Collaboration system for preparing "request for" (rfx) documents**

(30) Priority: 22.03.2012 US 201213427630
(71) Applicant: SAP AG, 69190 Walldorf (DE)
(72) Inventor: Nestler, Tobias, 69190 Walldorf (DE); Pursche, Andreas, 69190 Walldorf (DE)
(74) Representative: Müller-Boré & Partner Patentanwälte

(57) **Abstract**

Systems and methods allow collaboration in the creation of "Request For" (RfX) documents, and the drafting of responses thereto. In an embodiment, the system may create RfX document views comprising different subsets of the overall content of a voluminous RfX document. These views can be assigned to particular individuals or teams, who may in turn delegate the views to others to collect additional information. A user can also create and delegate sub-views further restricting the information available to others. In this manner, a user can define a view containing a single section of the RfX, or a collection of particular questions, and then delegate the view to an individual having particular expertise in that section or question.

## Description

### BACKGROUND

Unless otherwise indicated herein, the approaches described in this section are not prior art to the claims in this application and are not admitted to be prior art by inclusion in this section.

Standard procedures may be used to communicate information in the initial engagement phase between a buyer company and a potential supplier. The purpose of such "Request for" processes (e.g. Request for Information, Request for Proposal, or Request for Tender) is to create a formal mechanism for exchanging relevant knowledge and data between the involved parties.

The process is typically designed so that the company wanting to purchase a certain good or service, initially creates a request ("the RfX") that will be forwarded to potential suppliers. The request usually describes the information needs and requirements of the buyer's company and asks for statements of suppliers.

The size and scope of the RfX may vary. Typically it may managed by one employee or a small team, with contributions of subject matter experts of the buyer's organization, who are involved in the process of gathering the requirements. On the supplier's side, various subject matter experts may be consulted and asked to contribute to the response to the RfX.

Moreover, additional companies may be involved in the RfX process. Examples of such additional entities may include but are not limited to, consulting companies supporting the buyer or seller, or third party suppliers of hardware.

In the process of formulating and responding to an RfX, separate software systems may be used in parallel. This can lead to gaps in the process, creating tractability and coordination issues, especially for large organizations. Furthermore the location of relevant information and documents in different systems, may lead to inefficiencies.

The present disclosure addresses these and other issues with systems and methods allowing creation and delegation of views on RfX documents to promote collaboration and distributed work.

### SUMMARY

Systems and methods allow collaboration in the creation of "Request For" (RfX) documents, and the drafting of responses thereto. In an embodiment, the system may create RfX document views comprising different subsets of the overall content of a voluminous RfX document. These views can be assigned to particular individuals or teams, who may in turn delegate the views to others to collect additional information. A user can also create and delegate sub-views further restricting the information available to others. In this manner, a user can define a view containing a single section of the RfX, or a collection of particular questions, and then delegate the view to an individual having particular expertise in that section or question.

An embodiment of a computer-implemented method comprises providing a request for (RfX) document in connection with a purchase of goods and/or services, causing a view engine to communicate to a user a first view including at least a portion of the RfX document, and causing the view engine to receive from the user, an identification of a delegate. The view engine is caused to communicate to the delegate, a second view including at least a subset of the portion of the RfX document. The view engine is caused to display the second view to the delegate.

An embodiment of a non-transitory computer readable storage medium embodies a computer program for performing a method. The method comprises providing a request for (RfX) document in connection with a purchase of goods and/or services, causing a view engine to communicate to a user a first view including at least a portion of the RfX document, and causing the view engine to receive from the user, an identification of a delegate. The view engine is caused to communicate to the delegate, a second view including at least a subset of the portion of the RfX document. The view engine is caused to display the second view to the delegate.

An embodiment of a computer system comprises one or more processors and a software program, executable on said computer system. The software program is configured to provide a request for (RfX) document in connection with a purchase of goods and/or services, cause a view engine to communicate to a user a first view including at least a portion of the RfX document, and cause the view engine to receive from the user, an identification of a delegate. The software program is further configured to cause the view engine to communicate to the delegate a second view including at least a subset of the portion of the RfX document, and to cause the view engine to display the second view to the delegate.

In certain embodiments the user and the delegate comprise a buyer creating a question catalogue of the RfX document, and the portion comprises a topic area for use in generating a question of the question catalogue.

According to some embodiments the user and the delegate comprise a supplier responding to a question catalogue of the RfX document, and the portion comprises a question of the question catalogue.

Particular embodiments further comprise causing the view engine to receive from the user an access profile of the delegate, wherein the subset of the portion is determined according to the access profile.

According to certain embodiments, the view engine is caused to receive from the delegate an identification of a sub-delegate, caused to communicate to the sub-delegate, a third view including at least a part of the subset, and caused to display the third view to the sub-delegate.

Particular embodiments further comprise performing text analysis of the subset to identify a subject matter expert.

Some embodiments may further comprise performing text analysis of the subset to identify a related answer.

The following detailed description and accompanying drawings provide a better understanding of the nature and advantages of various embodiments.

### BRIEF DESCRIPTION OF THE DRAWINGS

Figure 1 shows a complex collaboration environment which may be present in RfX projects.

Figure 2 shows views on a simple RfX document.

Figure 3 depicts the assignment to team members of various views of an RfX document.

Figure 4 shows the hierarchical decomposition and delegation of views of an RfX document.

Figure 5 is a screen shot showing an example of a user interface according to an embodiment.

Figure 6 illustrates hardware of a special purpose computing machine which may be configured to implement RfX collaboration in accordance with particular embodiments.

Figure 7 illustrates an example of a computer system.

Figure 8 illustrates a simplified view of a method according to an embodiment.

### DETAILED DESCRIPTION

The apparatuses, methods, and techniques described below may be implemented as a computer program (software) executing on one or more computers. The computer program may further be stored on a computer readable medium. The computer readable medium may include instructions for performing the processes described below.

In the following description, for purposes of explanation, examples and specific details are set forth in order to provide a thorough understanding of various embodiments. It will be evident, however, to one skilled in the art that the claims may include some or all of the features in these examples alone or in combination with other features described below, and may further include modifications and equivalents of the features and concepts described herein.

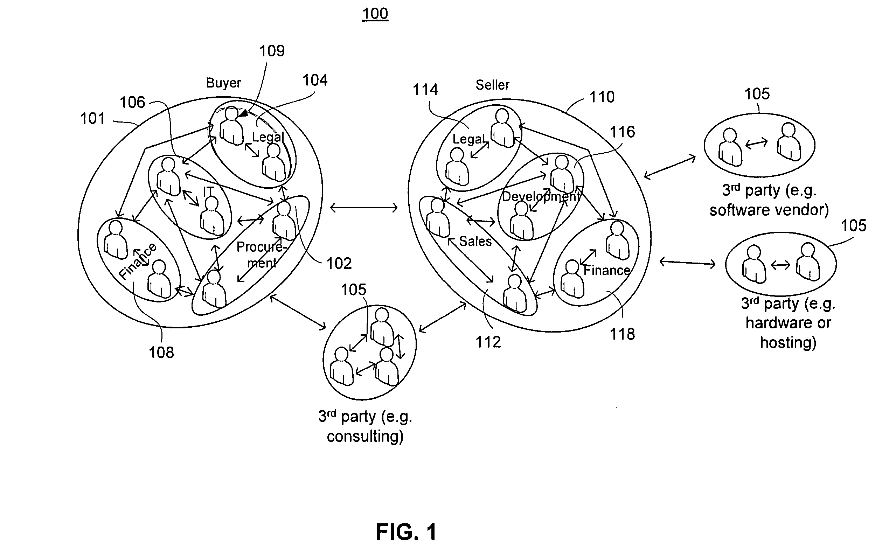

Figure 1 shows a collaboration environment which may be present in RfX projects. In particular, the collaboration environment 100 comprises a buyer 101 and a seller 110.

Figure 1 is simplified in that it shows only a one buyer and a one seller. Of course, more complex environments for collaboration exist, and can feature two or more companies forming a consortium to create a joint proposal. In such an environment, multiple companies could contribute to the overall RfX response. Accordingly, as used herein, the terms buyer and seller or supplier do not necessarily denote a single company or entity, but could also refer to a group of companies.

Figure 1 shows that in addition to buyers and sellers, other parties 105 may be involved in the RfX process as well. This occurs for example, if a single supplier does not offer all services or components of a product. Additional possible examples of such other parties include consultants, software vendors, hardware vendors, or parties responsible for hosting services. Such external parties can be invited to join the preparation of a proposal and contribute information for the response.

Usually these companies contribute information to certain sections or for specific question related to their role in the proposal. In many cases they do not get access to the whole RfX response.

The purchaser or buyer 101 (i.e. the issuer of the RfX), may comprise a plurality of departments, such as procurement 102, legal 104, information technology (IT) 106, and finance 108. Moreover, each department typically comprises a plurality of individuals 109 who may be involved in drafting the questions comprising the RfX.

Similarly, the seller or supplier 110 (i.e. the receiver of the RfX), may comprise a plurality of departments, such as sales 112, legal 114, development 116, and finance 118. Again, each department typically comprises a plurality of individuals who may be involved in drafting responses to questions posed in the RfX. In some cases, other companies can be involved that support the supplier.

Thus typically, several people are involved in the creation of sections of the RfX. Also, one person is not responsible for answering all questions. In reality a manager starts to delegate them to specialists within the company.

Conventionally, such delegation may be conducted via email or other communication channels that lie outside of a single environment. This can lead to information losses, missing transparency and traceability, and the creation of multiple documents requiring merger/reconciliation at the end.

In contrast, embodiments allow collaborative work on RfX documents to be performed in a single system extending across company borders. To ensure compatibility with the real-world workflows, embodiments employ dedicated views that can be delegated.

As used herein, the term "views" refers to different subsets of the overall content of the RfX document. Thus, the user can define a view containing a single section of the RfX, or a collection of particular questions.

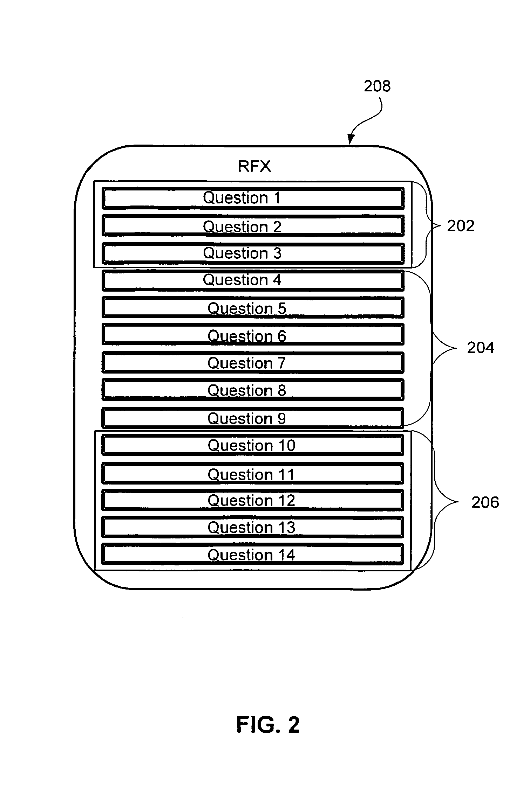

As an example, Figure 2 is a simplified depiction of three views 202, 204, and 206 on a simple RfX question catalogue 208 sent to a supplier company. Actual RfX documents may contain hundreds or even thousands of questions, depending on the complexity of the good or service being acquired.

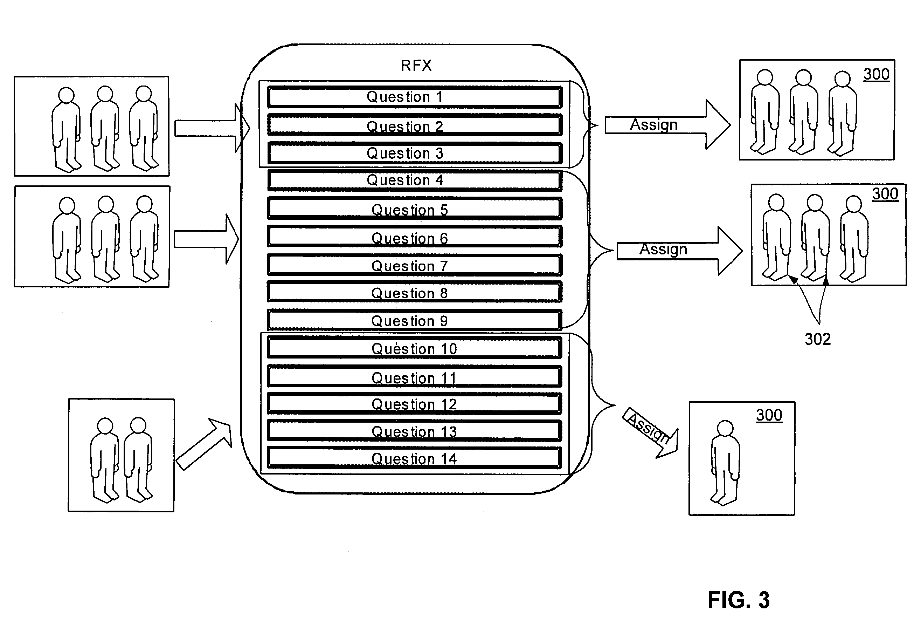

After view creation, the views are assigned to different employees who are then responsible for preparing answers. This is shown in a simplified manner in Figure 3, where teams 300 comprising one or more or individuals 302 are assigned to specific subsets of RfX content and granted access to particular views.

Although Figures 2-3 show the RfX process from a supplier's perspective, embodiments may also apply to the buyer's side in creation of the question catalogue. In that environment, different topic areas are defined (e.g. "functional requirements", "about the supplier's company").

Upon definition of those topic areas, a responsible person or team can be assigned to identify information needed for a proposal evaluation in order to write the corresponding questions. Furthermore, the topic areas may contain a sub-structure.

For example, "about the supplier's company" could have sections on reference projects, the financial performance, or sustainability questions related to the supplier's company. These sub-topics can be delegated and subject matter experts could be invited to express their opinion or add questions.

Thereby, views can be defined in the topic/sub-topic structure in order to collect and review the related questions. For each topic area, a separate view can be created and assigned to teams/employees in order to collect the related questions.

To provide a flexible customization of the system to the special requirements and team structures for each particular RfX project, a concept of "on-demand task decomposition and delegation" within the RfX system has been developed. Under this concept, a top-level manager can invite various teams to work on the RfX document, and assign views to them, as is shown in Figure 3.

Where the delegated view exhibits certain complexity, the responsible assigned party or person can invite other individuals to contribute to the view. Additionally, the responsible person can divide the view into several sub-views that can be further delegated. In this manner, the system can create a hierarchy structure of views.

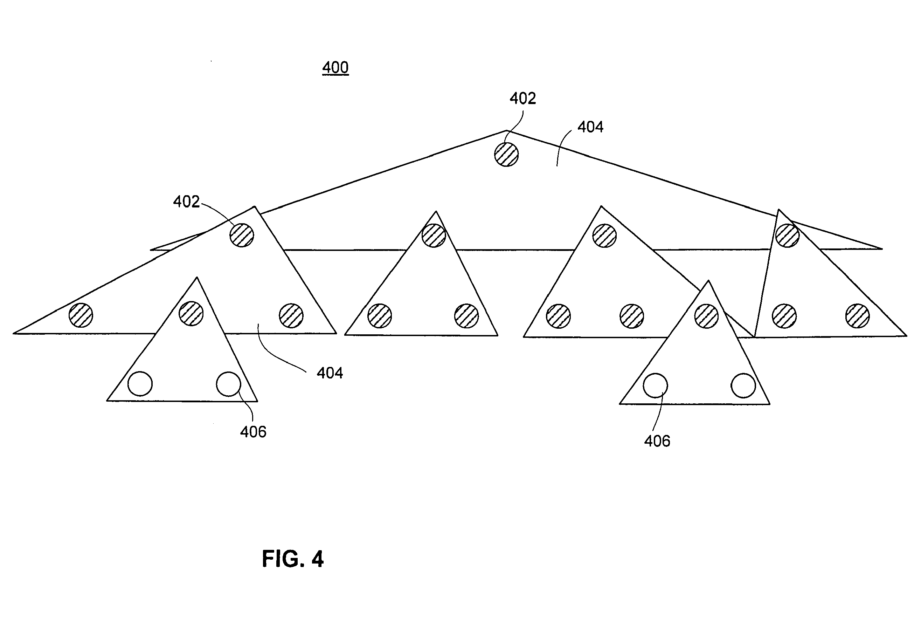

Such a view hierarchy 400 is shown in Figure 4. Specifically, in Figure 4 the solid circles 402 represent different individuals involved in the RfX project 400, who work on specific views (represented by triangles 404) of that project.

The "on-demand task decomposition and delegation" concept can also be used to communicate with experts on the subject matter of certain parts of the RfX. This is also shown in Figure 4, wherein expert(s) (open circles 406) can be invited to contribute to the preparation of a single question or answer.

According to embodiments, the system may create a view limited to specified content of the RfX document, for the selected person or group of persons. Only this newly created view will be provided to the selected person(s), in order to focus their effort on the task. This avoids having to share the entire RfX document.

The creation and delegation of views may be performed according to an access profile of the individual/team receiving the view. This access profile may determine the type and/or quantity of information of the view, that is to be shared by the delegate. This access profile may be retrieved by the view engine as a part of view creation.

Each question and answer can be stored in a central repository. Such a configuration allows multiple teams/individuals to contribute to the RfX-document without having to merge/reconcile results.

Since the process of answering questions is handled within a single system, it will be possible to track who has answered which question, and to store the answers together with other metadata related to the RfX. Moreover, this process may be complemented by state of the art text analysis techniques.

For example by employing text analysis techniques, the system may identify users who may have addressed a topic in the past. This overcomes problems of conventional approaches in efficiently identifying those within a large organization who are subject matter experts with relevant information.

Furthermore, text analysis techniques may allow the system to provide related answers. By offering such suggestions, this eases the discovery of existing related answers.

RfX collaboration tools according to various embodiments can be used for one or more purposes. For example, such RfX collaboration tools can be used to effectively support the following processes of the RfX procedure within a single system:
- creation of new RfX documents by multiple representatives of an organization;
- knowledge management and re-use; and
- collaborative response to questions and sections by delegating (sub-) sections through the use of views, allowing the efficient distribution of workload, integration of subject matter experts into the RfX-process, and/or minimize distraction by switching tools and contexts.

Embodiments of RfX collaboration systems may exist as stand-alone platforms, or as an extension of an existing platform. For example as described below in connection with a particular example, in the realm of products offered by SAP AG specific embodiments can be implemented as a standalone extension to the SAP SRM/Sourcing^{™}, which is a software solution addressing the web-based execution of RfX. In particular, embodiments as described herein could supplement SAP SRM/Sourcing^{™} by supporting collaborative processes of asking and answering questions with large teams.

In another example specific to SAP AG, particular embodiments could also be used to leverage the existing collaboration features of SAP StreamWork^{™}. In particular, SAP StreamWork^{™} is a workflow collaboration tool that is not specific to the creation and management of RfX documents.

**Example**

One potential implementation of certain embodiments, may be in conjunction with the StreamWork^{™} workflow collaboration platform available from SAP AG. The StreamWork^{™} platform includes the concept of "activities", wherein invited participants are able to work on a certain topic and share information.

Such an activity has a customizable workspace that can be adapted to the topic of the activity by adding specific collaboration tools. It provides the participants with generic tools for the collection of arguments, discussions, decision tables, tools to write texts, file sharing etc.

In a particular embodiment, such activities could be structured in a hierarchy that inherently conforms to the view hierarchy structure of the described RfX system. Embodiments could thus provide a customizable collaboration environment for various views. Accordingly, a group working on a certain view of an RfX document, may be provided with tools facilitating communication and information exchange such as document collections, discussions on different topics etc.

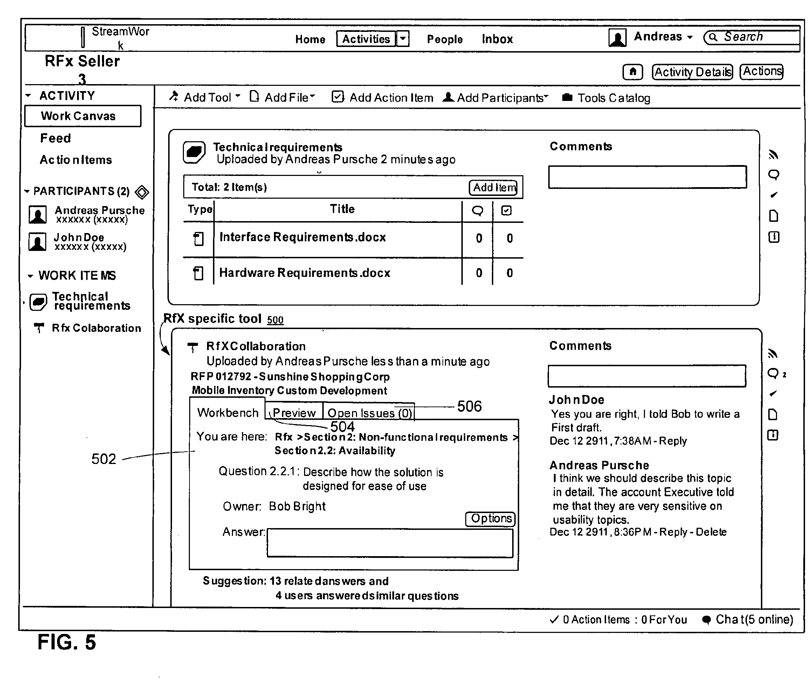

Figure 5 shows an example screen shot of one implementation of a user interface for one view containing a single question. Here, the RfX specific component 500 provides three primary functions to facilitate RfX collaboration.

In particular, the "Workbench" tab 502 provides the ability to edit an RfX document (or portion thereof). The "Preview" tab 504 provides the ability to inspect the appearance of an RfX document or portion thereof. The "Open Issues" tab 506 identifies discussion on particular topics that may be the subject of discussion between those sharing a given view.

Still other functions are possible to be implemented in the RfX specific component. For example, the RfX specific component could include an "In Box" feature that is designed to specifically receive and transmit communication taking place across organizational boundaries (e.g. between the purchaser and the supplier).

Furthermore, a dashboard for tracking the status of work could allow monitoring of the actions of sub-views in one place. For example, a dashboard could show the sections where teams have not stated working yet, and the sections that have been completed.

In addition to the RfX specific component, a team can customize the workspace and integrate particular collaboration tools that would aid in fulfilling the task of answering the questions. This can be done for a plurality of views, providing sub-teams working on the RfX with the ability to establish their own customized workspace while still participating in the same overall project.

In addition, the SAP SRM/Sourcing^{™} platform available from SAP AG, could address the web-based execution of RfX. Embodiments designed as extensions of such platforms may allow the creation of question catalogues, and their communication to a list of potential suppliers.

In particular embodiments, RfX collaboration approaches can be implemented as an extension to the SAP SRM/Sourcing^{™}, covering the organizational processes behind the creation of the questions of the RfX, and the preparation of answers thereto.

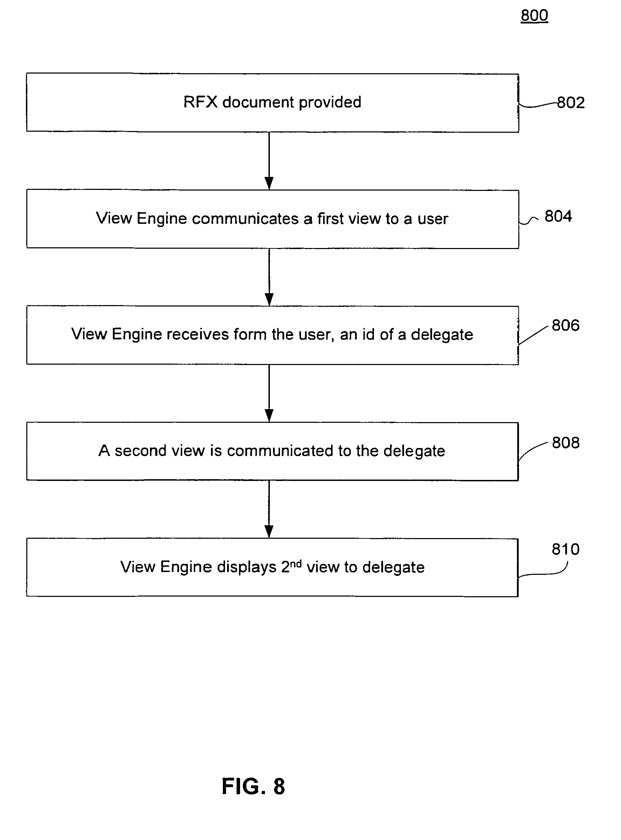

Figure 8 illustrates a simplified view of a method 800 according to an embodiment. In a first step 802, a request for (RfX) document is provided in connection with a purchase of goods and/or services. In a second step 804, a view engine is caused to communicate to a user, a first view including at least a portion of the RfX document.

In a third step 806, causing the view engine to receive from the user, an identification of a delegate. In a fourth step 808, the view engine is caused to communicate to the delegate, a second view including at least a subset of the portion of the RfX document. In a fifth step 810, the view engine is caused to display the second view to the delegate.

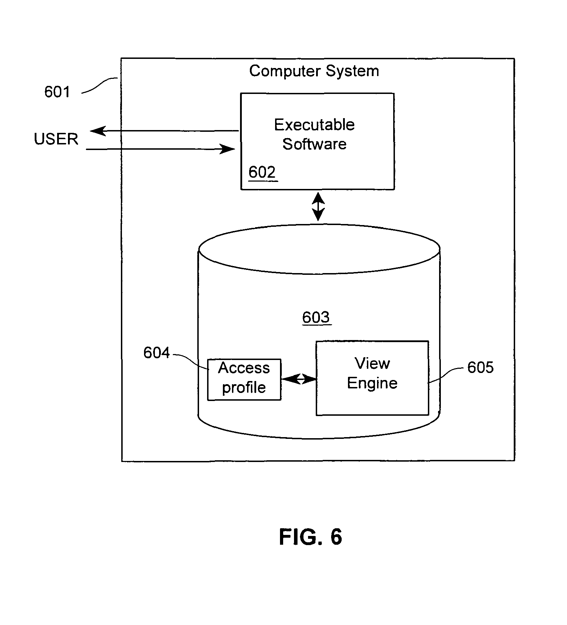

Figure 6 illustrates hardware of a special purpose computing machine. This computing machine may be configured to implement RfX collaboration approaches in accordance with particular embodiments.

Various configurations are possible. For example, all parties involved in the RfX collaboration (including the purchaser, supplier, and other involved parties like consulting companies, software vendors etc.) may access the system through a network in order to access the computing machine. In such an embodiment the computing machine is located off the premises of the parties and is maintained by a third party service provider.

According to alternative embodiments, all parties may run a computing machine on their own premises. Further alternatively, some parties may run a machine on their premises, while others may rely upon an off-premises machine. For either of these alternative embodiments, the synchronization of data of the different computing machines may be achieved over a network.

In particular, computer system 600 comprises a processor 602 that is in electronic communication with a non-transitory computer-readable storage medium 603. This computer-readable storage medium has stored thereon code 605 corresponding to the view engine element that is responsible for the creation of views of an RfX document. Code 604 corresponds to the access profile element which may be used to determine the particular information of a view that may be delegated to another user. Code may be configured to reference data stored in a database of a non-transitory computer-readable storage medium, for example as may be located in a remote database server.

Embodiments of may be run in conjunction with a computer system which may comprise a software server. A number of software servers together may form a cluster, or logical network of computer systems programmed with software programs that communicate with each other and work together to process requests.

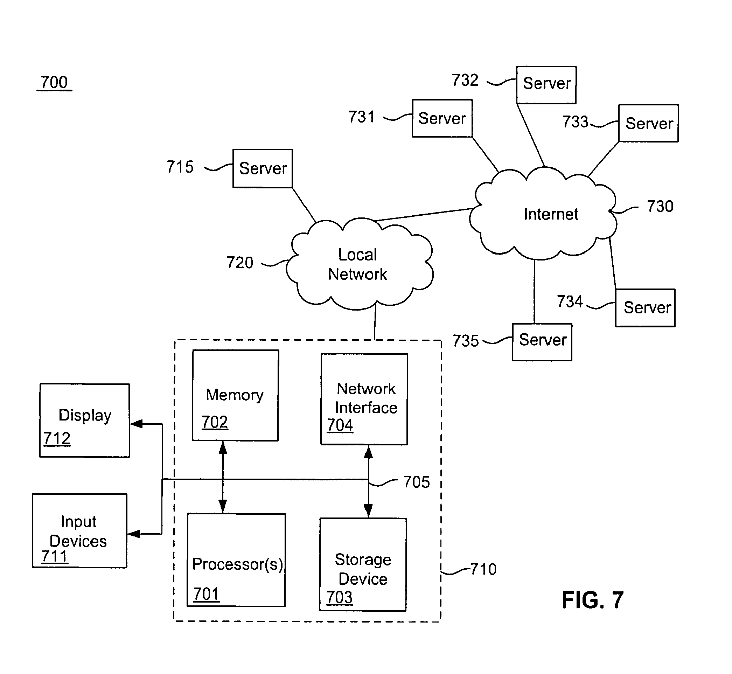

An example computer system 710 is illustrated in Fig. 7. Computer system 710 includes a bus 705 or other communication mechanism for communicating information, and a processor 701 coupled with bus 705 for processing information.

Computer system 710 also includes a memory 702 coupled to bus 705 for storing information and instructions to be executed by processor 701, including information and instructions for performing the techniques described above, for example. This memory may also be used for storing variables or other intermediate information during execution of instructions to be executed by processor 701. Possible implementations of this memory may be, but are not limited to, random access memory (RAM), read only memory (ROM), or both.

A storage device 703 is also provided for storing information and instructions. Common forms of storage devices include, for example, a hard drive, a magnetic disk, an optical disk, a CD-ROM, a DVD, a flash memory, a USB memory card, or any other medium from which a computer can read.

Storage device 703 may include source code, binary code, or software files for performing the techniques above, for example. Storage device and memory are both examples of computer readable media. The computer system generally described in Figure 7 includes at least those attributes described in Figure 6.

Computer system 710 may be coupled via bus 705 to a display 712, such as a cathode ray tube (CRT) or liquid crystal display (LCD), for displaying information to a computer user. An input device 711 such as a touch screen, is coupled to bus 705 for communicating information and command selections from the user to processor 701. The combination of these components allows the user to communicate with the system. In some systems, bus 705 may be divided into multiple specialized buses.

Computer system 710 also includes a network interface 704 coupled with bus 705. Network interface 704 may provide two-way data communication between computer system 710 and the local network 720. The network interface 704 may be for Broadband Wireless Access (BWA) technologies. In any such implementation, network interface 704 sends and receives electrical, electromagnetic, or optical signals that carry digital data streams representing various types of information.

Computer system 710 can send and receive information, including messages or other interface actions, through the network interface 704 across a local network 720, an Intranet, or the Internet 730. For a local network, computer system 710 may communicate with a plurality of other computer machines, such as server 715. Accordingly, computer system 710 and server computer systems represented by server 715 may form a cloud computing network, which may be programmed with processes described herein.

In an example involving the Internet, software components or services may reside on multiple different computer systems 710 or servers 731-735 across the network. The processes described above may be implemented on one or more servers, for example. A server 731 may transmit actions or messages from one component, through Internet 730, local network 720, and network interface 704 to a component on computer system 710. The software components and processes described above may be implemented on any computer system and send and/or receive information across a network, for example.
Particularly, there is described a non-transitory computer readable storage medium embodying a computer program for performing a method, said method comprising: providing a request for (RfX) document in connection with a purchase of goods and/or services; causing a view engine to communicate to a user, a first view including at least a portion of the RfX document; causing the view engine to receive from the user, an identification of a delegate; causing the view engine to communicate to the delegate, a second view including at least a subset of the portion of the RfX document; and causing the view engine to display the second view to the delegate.
Further particularly, the user and the delegate comprise a buyer creating a question catalogue of the RfX document; and the portion comprises a topic area for use in generating a question of the question catalogue.
Further particularly, the user and the delegate comprise a supplier responding to a question catalogue of the RfX document; and the portion comprises a question of the question catalogue.
Further particularly, the method and/or computer program product further comprises causing the view engine to receive from the user an access profile of the delegate, wherein the subset of the portion is determined according to the access profile.
Further particularly, the method and/or the computer program product further comprises: causing the view engine to receive from the delegate, an identification of a sub-delegate; and causing the view engine to communicate to the sub-delegate, a third view including at least a part of the subset; and causing the view engine to display the third view to the sub-delegate.
Further particularly, the method and/or the computer program product further comprises: performing text analysis of the subset to identify a subject matter expert.
Further particularly, the method and/or the computer program product further comprises: performing text analysis of the subset to identify a related answer.

Based on the above disclosure and the following claims, other arrangements, embodiments, implementations and equivalents will be evident to those skilled in the art and may be employed without departing from the spirit and scope of the invention as defined by the claims.

## Claims

1. A computer-implemented method comprising:
providing a request for (RfX) document in connection with a purchase of goods and/or services;
causing a view engine to communicate to a user, a first view including at least a portion of the RfX document;
causing the view engine to receive from the user, an identification of a delegate;
causing the view engine to communicate to the delegate, a second view including at least a subset of the portion of the RfX document; and
causing the view engine to display the second view to the delegate.

2. The method of claim 1 wherein:
the user and the delegate comprise a buyer creating a question catalogue of the RfX document; and
the portion comprises a topic area for use in generating a question of the question catalogue.

3. The method of claim 1 wherein:
the user and the delegate comprise a supplier responding to a question catalogue of the RfX document; and
the portion comprises a question of the question catalogue.

4. The method of claim 1 further comprising causing the view engine to receive from the user an access profile of the delegate, wherein the subset of the portion is determined according to the access profile.

5. The method of claim 1 further comprising:
causing the view engine to receive from the delegate, an identification of a sub-delegate; and
causing the view engine to communicate to the sub-delegate, a third view including at least a part of the subset; and
causing the view engine to display the third view to the sub-delegate.

6. The method of claim 1 further comprising performing text analysis of the subset to identify a subject matter expert.

7. The method of claim 1 further comprising performing text analysis of the subset to identify a related answer.

8. A computer program product comprising computer-readable instructions which, when loaded and executed on a suitable system perform the steps of a method according to any one of the preceding claims.

9. A computer system comprising:
one or more processors;
a software program, executable on said computer system, the software program configured to:
provide a request for (RfX) document in connection with a purchase of goods and/or services;
cause a view engine to communicate to a user, a first view including at least a portion of the RfX document;
cause the view engine to receive from the user, an identification of a delegate;
cause the view engine to communicate to the delegate, a second view including at least a subset of the portion of the RfX document; and
cause the view engine to display the second view to the delegate.

10. The computer system of claim 9, wherein:
the user and the delegate comprise a buyer creating a question catalogue of the RfX document; and
the portion comprises a topic area for use in generating a question of the question catalogue.

11. The computer system of claim 9 or 10, wherein:
the user and the delegate comprise a supplier responding to a question catalogue of the RfX document; and
the portion comprises a question of the question catalogue.

12. The computer system of claim 9, 10 or 11, wherein the computer program is further configured to cause the view engine to receive from the user an access profile of the delegate, wherein the subset of the portion is determined according to the access profile.

13. The computer system of any one of the preceding claims 9 to 12, wherein the computer program is further configured to:
cause the view engine to receive from the delegate, an identification of a sub-delegate;
and
cause the view engine to communicate to the sub-delegate, a third view including at least a part of the subset; and
cause the view engine to display the third view to the sub-delegate.

14. The computer system of any one of the preceding claims 9 to 13, wherein the computer program is further configured to perform text analysis of the subset to identify a subject matter expert or a related answer.
